# EUROPEAN PATENT APPLICATION

(11) **EP 4 459 931 A1**
(43) Date of publication of application: **06.11.2024**
(21) Application number: 22916226.8
(22) Date of filing: 04.04.2022
(51) Int. Cl.: H04L 12/28, G06F 8/65, G06F 8/61, G06F 8/71, G06F 9/451, G06F 9/54, G06F 9/4401, H04L 67/00

(54) **METHOD FOR FACILITATING POST-UPGRADE SOFTWARE FUNCTION CONFIGURATION OF HOME APPLIANCES AND APPARATUS FOR IMPLEMENTING SAME**

(30) Priority: 31.12.2021 KR 20210194661; 24.01.2022 KR 20220009876
(71) Applicant: LG Electronics Inc., Yeongdeungpo-gu Seoul 07336 (KR)
(72) Inventor: RYU, Byoungwook, Seoul 08592 (KR); LEE, Jin Wook, Seoul 08592 (KR); NO, Hyohoun, Seoul 08592 (KR)
(74) Representative: Vossius & Partner Patentanwälte Rechtsanwälte mbB
(86) International application number: PCT/KR2022/004785
(87) International publication number: WO 2023/128065

(57) **Abstract**

Disclosed are a method for readily setting a function of software of a home appliance after completion of an upgrade, and a device embodying the same.. The method may comprise providing an upgrade completion notification message, comprising an area configured to suggest setting of an upgraded function of software, to the user. Accordingly, a newly upgraded function of the software may be set immediately after the upgrade of the software.

## Description

### [Technical Field]

The present disclosure relates to a method for readily setting a function of software of a home appliance after completion of an upgrade, and a device embodying the same.

### [Background Art]

A home appliance comprises a control unit. The control unit executes specific software and embodies a function desired by the user.

Ordinarily, a manufacturer of a home appliance provides simple assistance only such as a correction of an error of a program and the like after sales. In the case where a new home appliance having a new function is launched, the user needs to purchase the product. That is, the user needs to replace an existing home appliance with a new one, to use a new function, causing inconvenience to the user. To solve the problem, the user upgrades software of a home appliance to improve or add a function of the home appliance.

An upgrade process comprises a download procedure of receiving software data from a management server and storing the same, and a writing procedure of writing the downloaded software data to a control unit.

Upgrade software comprises a new function. A home appliance is controlled by a user terminal, and the user sets a new function of the software by using an application for controlling a home appliance, installed in the user terminal.

In an example, in the case where the home appliance is a washing machine which comprises a display unit and the software of which is a contents program setting a background screen of the display unit, before upgrading, software comprises an existing background image, while after upgrading, software comprises a new background image. At this time, the user executes the application to set the background screen of the display unit to a new background image after the software is upgraded completely.

In the example described above, after the software is upgraded completely, the user consecutively performs input events such as "setting tab → washing machine tab → background screen setting tab → image selection", to set the background screen of the display unit to a new background image.

However, it takes time to consecutively perform the input events, and the user needs to pay attention to perform the input events, increasing inconvenience.

### [Disclosure]

### [Technical Problem]

The objective of the present disclosure is to provide a method for readily setting a new function of software after an upgrade of the software of a home appliance, and a device embodying the same.

The objective of the present disclosure is to provide a method in which software requiring setting of a new function is only output to the user, thereby ensuring improvement in user convenience in relation to setting of a function of software, and a device embodying the same.

Aspects according to the present disclosure are not limited to the above ones, and other aspects and advantages that are not mentioned above may be clearly understood from the following description and may be more clearly understood from the embodiments set forth herein.

### [Technical Solution]

In a method of one embodiment, an upgrade completion notification message comprising an area suggesting setting an upgraded function of software may be provided to the user. Thus, a newly upgraded function of the software may be set immediately after an upgrade of the software.

In the method, an upgrade completion notification message comprising a suggestion area excluding software requiring no setting of a new function may be provided to the user. Thus, user convenience in relation to setting a newly upgraded function of software may improve.

Additionally, a management server of one embodiment comprises a communication unit configured to communicate with a user terminal and a home appliance, and a control unit configured to control the communication unit and to perform an operation in relation to an upgrade of a plurality of software to be installed in the home appliance. In a case where the plurality of software is upgraded completely, the communication unit transmits a first output instruction message for instructing an output of an upgrade completion notification message to the user terminal. Additionally, the upgrade completion notification message comprises a first notification area notifying that the plurality of software is upgraded completely, and further comprises a first suggestion area suggesting setting an upgraded function of at least a portion of the plurality of software.

Further, a home appliance of one embodiment comprises a communication unit configured to communicate with a management server, a user interface configured to output specific information to a user, and a control unit in which a plurality of software is installed. In a case where the communication unit downloads a plurality of software data from the management server, writes the plurality of downloaded software data to the control unit and upgrades the plurality of software, and then the upgrade is completed, the communication unit transmits an upgrade completion report message of the plurality of software to the management server. The upgrade completion report message comprises identifiers of at least a portion of the plurality of software, and at least a portion of the software is software requiring setting of an upgraded function.

A method for controlling a user terminal to upgrade a home appliance of one embodiment comprises receiving a first output instruction message corresponding to completion of an upgrade of a plurality of software from a management server, and outputting an upgrade completion notification message of the plurality of software based on the first output instruction message. The upgrade completion notification message comprises a first notification area notifying that the plurality of software is upgraded completely, and further comprises a first suggestion area suggesting setting an upgraded function of at least a portion of the plurality of software.

### [Advantageous Effects]

According to the present disclosure, a newly upgraded function of software is set immediately after the software is upgraded, thereby ensuring ease of setting a new function of the software.

According to the present disclosure, only software which requires setting of a new function is output to the user, ensuring improvement in user convenience in relation to function setting.

Specific effects are described along with the above-described effects in the section of detailed description.

### [Description of Drawings]

FIG. 1 is a block diagram showing a schematic configuration of a system upgrading a home appliance of one embodiment.
FIG. 2 is a block diagram showing a schematic configuration of a home appliance of one embodiment.
FIG. 3 is a block diagram showing a schematic configuration of a user terminal of one embodiment.
FIG. 4 is a block diagram showing a schematic configuration of management server of one embodiment.
FIG. 5 is a view showing a flow of a method for upgrading a home appliance of one embodiment.
FIGS. 6 and 7 are views showing a flow of a following process of an upgrade in a method for upgrading a home appliance, in one embodiment.
FIGS. 8 to 11 are views showing the display screen of a user terminal, displayed to the user, in a following process of an upgrade, in one embodiment.
FIG. 12 is a view showing a flow of a partial step included in a following process of an upgrade in a method for upgrading a home appliance, in one embodiment.
FIGS. 13 to 16 are views for describing FIG. 12.
FIG. 17 is a view showing specific communication among a management server, a home appliance and a user terminal in one embodiment.
FIG. 18 is a view showing an upgrade process of another embodiment.

### [Detailed Description of Exemplary Embodiments]

Embodiments according to the present disclosure are specifically described herein with reference to the accompanying drawings such that one having ordinary skill in the art to which the present disclosure pertains can easily embody the technical spirit of the disclosure. The subject matter of the present disclosure may be embodied in various forms and not limited to the embodiments set forth herein.

In order to clearly explain the present invention, parts that are not relevant to the description are omitted, and identical reference numerals can denote identical or similar components throughout the specification. Description will now be given in detail according to exemplary embodiments disclosed herein, with reference to the accompanying drawings. In adding reference numerals to components in each drawing, the same components may be provided with the same reference numbers as much as possible even if they are shown in different drawings.. Additionally, if it is determined that a detailed description of a related known configuration or function may obscure the gist of the present invention, the detailed description may be omitted.

Terms such as first, second, A, B, (a), and (b) may be used to describe components of the present disclosure. These terms are merely used to distinguish one component from another component, and the essence, order, sequence, number, or the like of the components is not limited by the terms. When any one component is described as being "connected", "coupled" or "connected" to another component, any one component can be directly connected or coupled to another component, but an additional component can be "interposed" between the two components or the two components can be "connected" or "coupled" by an additional component.

Throughout the disclosure, each component can be provided a single one or a plurality of ones, unless stated to the contrary.

In the disclosure, singular forms include plural forms as well, unless explicitly indicated otherwise. In the disclosure, the terms "being comprised of" or "comprise" and the like do not imply necessarily including stated components or stated steps and imply excluding some of the stated components or stated steps or including additional components or additional steps.

In addition, components may be subdivided for convenience of description in embodying the subject matter of the present disclosure, but these components may be embodied in one device or module, or one component may be embodied by being divided into a plurality of devices or modules.

Hereinafter, preferred embodiments according to the present disclosure are specifically described with reference to the accompanying drawings.

In the present disclosure, an upgrade of a home appliance means an upgrade of software installed in the home appliance. The software may comprise firmware for the operation of a control unit (i.e., a micom) and a contents program executed on the firmware. In an example, the contents program may be a program for setting the background screen of the display unit of a washing machine, a program for setting an cycle course of a washing machine and the like.

Additionally, an upgrade process is defined as comprising a download procedure and a writing procedure. The download procedure involves receiving software data for writing software by the home appliance and storing the software data in the home appliance. The writing procedure involves writing the software data, stored in the home appliance, in a control unit or a micom.

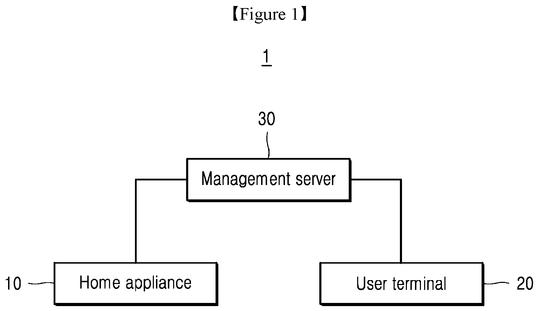

FIG. 1 is a block diagram showing a schematic configuration of a system 1 upgrading a home appliance of one embodiment.

Referring to FIG. 1, the system 1 (hereinafter, "system") upgrading a home appliance may comprise a home appliance 10, a user terminal 20 and a management server 30.

The home appliance 10 may denote an electronic product that is installed in a space inhabited by the user, in an office space and the like and performs its unique function. In an example, the home appliance 10 may comprise a refrigerator, a TV, a washing machine, a dryer, an air conditioner, an air purifier, a medical device, a microwave oven, an electric range, an oven and the like.

The user terminal 20 may be a device belonging to the user, and a device transceiving specific information with the home appliance 10 through the management server 30, to perform an upgrade of the home appliance 10. In an example, the user terminal 20 may be smart devices such as a smartphone, a smart watch, a tablet PC and the like, or may be a home hub for a household or an artificial intelligence (AI) speaker as a separate electronic device, or may be a refrigerator, a TV and the like that may operate together with a smart device.

The management server 30 may be a device that manages the home appliance 10 remotely. The management server 30 may communicably connect with the home appliance 10 through a communication network. Additionally, the management server 30 may also communicably connect with the user terminal 20, and manage the home appliance 10 in association with the user terminal 20.

In particular, the management server 30 may store information for upgrading the home appliance 10. The information stored in the management server 30 may comprise software data installed in the home appliance 10, information on the home appliance 10, and information on the user and the like. The software data may comprise at least a portion of data on firmware of the home appliance (i.e. firmware data) and data on a contents program executed on the firmware (i.e., contents program data).

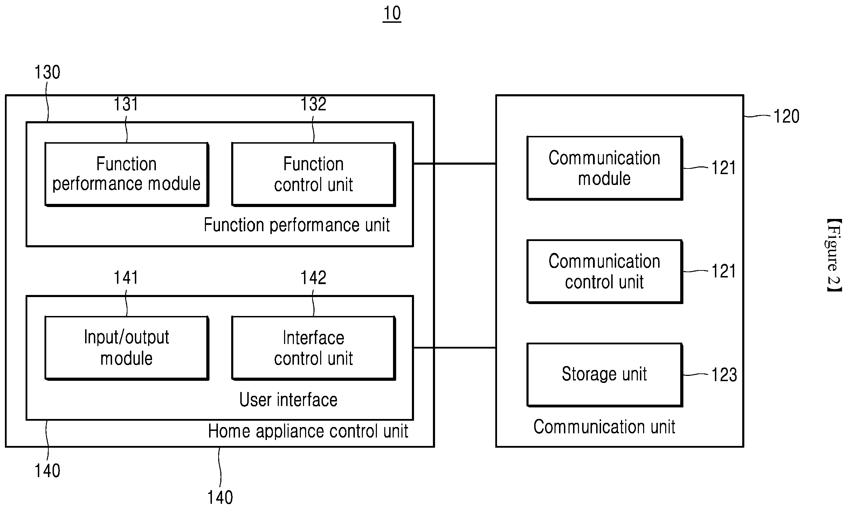

Hereinafter, the configurations of the home appliance 10, the user terminal 20 and the management server 30 are described more specifically, with reference to FIGS. 2 to 4.

FIG. 2 is a block diagram showing a schematic configuration of a home appliance 1 of one embodiment.

Referring to FIG. 2, the home appliance 10 may comprise a home appliance control unit 110 and a communication unit 120. The home appliance control unit 110 may comprise a function performance unit 130 and a user interface 140. Additionally, the configuration of the home appliance 10 may not be limited to that of FIG. 2, and a variety of additional components may be included in the home appliance 10.

The communication unit 120, the function performance unit 130 and the user interface 140 may transceive data with one another through a local bus.

The home appliance control unit 110 may control entire operations of the home appliance 10.

The communication unit 120 may communicate with the management server 30.

In particular, the communicate unit 120 may receive software data such as firmware data and contents program data from the management server 30, store the software data received, and transmit the software data stored to at least one of the function performance unit 130 and the user interface 140 in the home appliance control unit 110.

The communication unit 120 may comprise a communication module 121, a communication control unit 122 and a storage unit 123.

The communication module 121 may transceive data. The communication module 121 may transceive data in a wired manner and/or a wireless manner.

In the embodiment, the communication module 121 may be a short-range wireless communication module embodying short-range wireless communication. The short-range wireless communication module may be a wireless communication module based on wireless fidelity (Wi-Fi), Bluetooth, radio frequency identification (RFID), infrared data association (IrDA), ultra-wideband (UWB), ZigBee and the like.

In the case where the communication module 121 is a short-range wireless communication module, an access point (not illustrated) may be provided in the user's residential space. The access point may be a device that relays wireless communication between the management server 30 and the communication module 121. In an example, in the case where the communication module 121 is a WiFi module, the access point may be a WiFi router.

In another embodiment, the communication module 121 may be a long-range wireless communication module embodying long-range wireless communication. The long-range wireless communication module may be a wireless communication module based on code division multiple access (CDMA), frequency division multiple access (FDMA), time division multiple access (TDMA), orthogonal frequency division multiple access (OFDMA), single carrier frequency division multiple access (SCFDMA), 5 generation (5G) and the like.

The communication control unit 122 may control the communication module 121 and the storage unit 123. The communication control unit 122 may correspond to a micom for controlling communication. The communication control unit 122 may operate based on firmware.

The communication control unit 122 may store data received from the communication module 121, in particular, software data in the storage unit 123. Additionally, the communication control unit 122 may transmit the software data stored in the storage unit 123 to the function performance unit 130 and the user interface 140 through a local bus.

Though not illustrated, the communication control unit 122 may comprise a processor and an internal memory.

The processor may comprise one or more of a central processing unit (CPU), an application processor or a communication processor. The processor may operate based on firmware and execute one or more of instructions in relation to control of the home appliance 10.

The internal memory may be a volatile and/or non-volatile memory. The internal memory may store firmware and store one or more of instructions in relation to control of the communication unit 120.

The storage unit 123 may be a volatile and/or non-volatile memory, and store software data received from the communication module 121.

In the embodiment, software data is stored in the storage unit 123, but in another embodiment, software data may be stored in a partial area (i.e., a download area) allocated out of the entire area of the internal memory of the communication control unit 122. The communication unit 120 may transmit and write software data to the memory of the home appliance control unit 110, based on serial communication, such that software installed previously is updated or software not installed previously is added. In the case where software data are completely transmitted to the memory of the home appliance control unit 110 and then the home appliance is rebooted, the download area may be allocated to a control area again, and the communication control unit 122 may perform a writing operation of an upgrade of the software of the home appliance 10. Further, in yet another embodiment, software data may be stored in the memory of the home appliance control unit 110.

The function performance unit 130 may be a component that performs a unique function provided by the home appliance 10. In an example, the unique function may be a washing function of a washing machine, a drying function of a dryer, an air-conditioning function of an air conditioner, an air-purifying function of an air purifier and the like.

The function performance unit 130 may comprise a function performance module 131 and a function control unit 132.

The function performance module 131 as a module performing the above-described function may comprise a driving unit comprising a motor, a heating unit, a cooling unit and the like.

The function control unit 132 may control the function performance module 131. The function control unit 132 may correspond to a micom for controlling the performance of a function. The function control unit 132 may operate based on firmware.

Though not illustrated in the drawing, the function control unit 132 may comprise a processor and internal memories. The processor and the internal memory are described above.

The user interface 140 may provide operation information of the home appliance 10, and information on an upgrade of the home appliance 10 and the like to the user. In an example, the user interface 140 may comprise a display module and a speaker module. Additionally, the user interface 140 may receive an input for controlling an operation of the home appliance 10 from the user.

The user interface 140 may comprise an input/output module 141 and an interface control unit 142.

The input/output module 141 may output the operation information of the home appliance 10 and the information on an upgrade of the home appliance 10 visually and/or acoustically to the user, and receive input information. In the case where the input/output module 141 is a display module, the input/output module 141 may be a display panel.

The interface control unit 142 may control the input/output module 141. The interface control unit 142 may correspond to a micom for controlling an interface. The interface control unit 142 may operate based on firmware.

Though not illustrated in the drawing, the interface control unit 142 may comprise a processor and an internal memory. The processor and the internal memory are described above.

Additionally, the firmware of the communication control unit 122, the firmware of the function control unit 132 and the firmware of the interface control unit 142 may differ from one another.

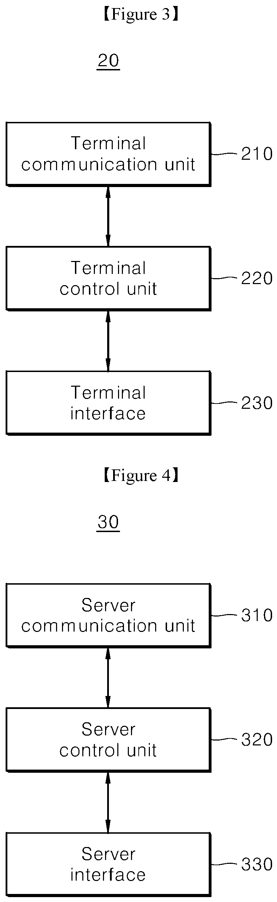

FIG. 3 is a block diagram showing a schematic configuration of a user terminal 20 of one embodiment.

Referring to FIG. 3, the user terminal 20 may comprise a terminal communication unit 210, a terminal control unit 220 and a terminal interface 230.

The terminal communication unit 210 may communicate with the management server 30. The terminal communication unit 210 may perform communication based on a wired and/or wireless method. The wireless method may comprise a short-range wireless communication method and a long-range wireless communication method.

The terminal control unit 220 may control the terminal communication unit 210 and the terminal interface 230.

Though not illustrated in the drawing, the terminal control unit 220 may comprise a processor and an internal memory. The internal memory may store an application for a terminal, used for managing the home appliance 10. The processor may execute the application for a terminal.

The terminal interface 230 may output a screen of the execution of the application for a terminal is executed. In particular, the terminal interface 230 may output information in relation to an upgrade of the home appliance 10 visually and/or acoustically.

FIG. 4 is a block diagram showing a schematic configuration of management server 30 of one embodiment.

Referring to FIG. 4, the management server 30 may comprise a server communication unit 310, a server control unit 320 and a server storage unit 333.

The server communication unit 310 may communicate with the home appliance 10 and the user terminal 20. The server communication unit 310 may perform communication based on a wired method and/or wireless method. The wireless method may comprise a short-range wireless communication method and a long-range wireless communication method.

The server control unit 320 may control a server communication unit 310 and a server storage unit 330.

Though not illustrated in the drawing, the server control unit 320 may comprise a processor and an internal memory. The internal memory may store an application for a server, used for managing the home appliance 10. The processor may execute the application for a server.

The server storage unit 330 may be a volatile and/or non-volatile memory, and store information in relation to an upgrade of the home appliance 10. The information in relation to an upgrade may comprise software data installed in the home appliance 10, information on the home appliance 10, information on the user and the like. Additionally, the software data may comprise firmware data of the home appliance and contents program data.

Further, each of the firmware data and contents program data may be stored in the server storage unit 330, based on its version. In particular, the latest version of each of the firmware data and the contents program data may be stored in the server storage unit 330, for an upgrade of software.

As described above, the home appliance 10 may comprise a plurality of control units (micoms) 122, 132, 142, and the firmware of each of the plurality of control units may differ. The server storage unit 330 may store firmware data for each of the plurality of control units 122, 132, 142.

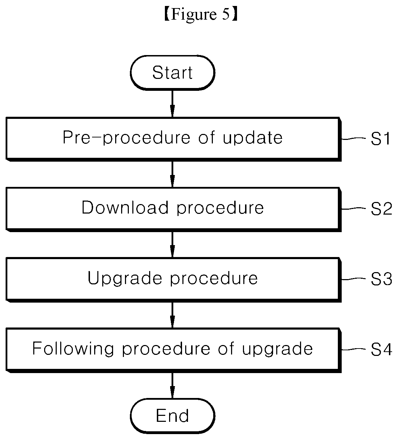

Hereinafter, a process of upgrading software data, performed by a system 1, is described with reference to FIG. 5.

FIG. 5 is a view showing a flow of a method for upgrading a home appliance 10 of one embodiment.

The method for upgrading a home appliance may be performed in relation to each of the plurality of home appliances 10 possessed by the user, and for convenience of description, a method for upgrading software in relation to one home appliance 10 is described in FIG. 5.

The method for upgrading software may be performed by the home appliance 10, the user terminal 20 and the management server 30, described above, in association with one another.

Hereinafter, procedures performed in each step are described.

In S 10, a pre-procedure of an upgrade may be performed.

In S10, the home appliance 10 and the management server 30 may communicably connect with each other, information on an upgrade may be stored in the server storage unit 330, and an upgrade schedule comprising an upgrade cycle, an upgrade reservation and the like may be set.

In S20 and S30, an upgrade process may be performed.

First, in S20, a download procedure in the upgrade process may be performed.

Specifically, the management server 30 may transmit software data to the home appliance 10. The software data transmitted from the management server 30 may be received by the communication unit 120 of the home appliance 10 and then stored. Further, the software data transmitted may be firmware data or contents program data, as described above.

The software data may comprise two or more of firmware data, and the management server 30 may transmit two or more of firmware data to the home appliance 10 consecutively. That is, in the case where two or more of the plurality of control units 122, 132, 142 included in the home appliance 10 are upgraded, the management server 30 may transmit two or more of firmware data corresponding to the two or more control units to the home appliance 10 consecutively. The order of transmitting two or more of firmware data may be set in advance. In an example, in the case where the home appliance control unit 110 and the interface control unit 142 are upgraded, firmware data in relation to the home appliance control unit 110 may be transmitted first and then firmware data in relation to the interface control unit 142 may be transmitted.

Alternatively, the software data may comprise two or more of contents program data, and the management server 30 may transmit two or more of contents program data to the home appliance 10 consecutively. Each of the two or more of contents program data may be data in relation to a content program that is executed by one or more control units out of the plurality of control units 122, 132, 142 included in the home appliance 10. The order of transmitting two or more of contents program data may be set in advance.

Alternatively, the software data may comprise at least one of firmware data and at least one of contents program data. At this time, the management server 30 may transmit at least one of firmware data and at least one of contents program data consecutively.

Then in S30, a writing procedure in the upgrade process may be performed.

Specifically, the communication unit 120 may write software data stored to a corresponding control unit among the plurality of control units 122, 132, 142. As the software data is written to the control unit, software may be installed in the control unit.

In the case where the plurality of software data stored in the communication unit 120 comprise two or more of firmware data, the communication unit may write each of the two or more of firmware data to a corresponding control unit. The order of writing two or more of firmware data may be set in advance. In an example, in the case where the home appliance control unit 110 and the interface control unit 142 are upgraded, firmware data in relation to the home appliance control unit 110 may be written first and then firmware data in relation to the interface control unit 142 may be written.

Alternatively, in the case were the plurality of software data stored in the communication unit 120 comprises two or more of contents program data, the communication unit may write two or more of contents program data to corresponding control units. The order of writing two or more of contents program data may be set in advance.

Alternatively, in the case where the plurality of software data stored in the communication unit 120 comprises at least one of firmware data and at least one of contents program data, the communication unit may write at least one of firmware data and at least one of contents program data to a corresponding control unit. The order of writing at least one of firmware data and at least one of contents program data may be set in advance. In an example, in the case where the plurality of software data are firmware data and contents program data in relation to the user interface, the firmware data may be written and then the contents program data may be written.

In S40, the following process of an upgrade may be performed.

In an example, in S40, a specific function of the software upgraded may be set. In particular, in the case where a plurality of software is upgraded completely, a specific function of each of the plurality of software may be set consecutively. The specific function of the software may be an upgraded function of the software, and the upgraded function may be a new function unlike an existing function.

In summary, in the method for upgrading a home appliance 10 described with reference to FIG. 5, as new software data for performing an upgrade is registered (i.e., uploaded) with the management server 30, the home appliance 20 may download updated software data automatically from the management server 30, and in association with the user terminal 20, write the updated software data to a corresponding control unit, such that software is upgraded. At this time, no notification may not be displayed on the user terminal 20 before the download is completed, and in the case where the download is completed, a notification that software is upgradable may be displayed on the user terminal 20, and the home appliance 10 may write the software to a corresponding control unit based on the user's check of the notification.

However, in another embodiment, as new software data are registered (i.e., uploaded) with the management server 30, a notification that software is upgradable may be displayed on the user terminal 20 before the download starts. That is, the management server 30 may transmit a notification of an upgrade of software to the user terminal 20 before the download procedure (S20), and the user may check the notification displayed on the user terminal 20. Then software to be upgraded may be selected on the user terminal 20, based on the user's check, and the upgrade process (i.e., the download procedure (S20) and the writing procedure (30)) of the software selected may be performed.

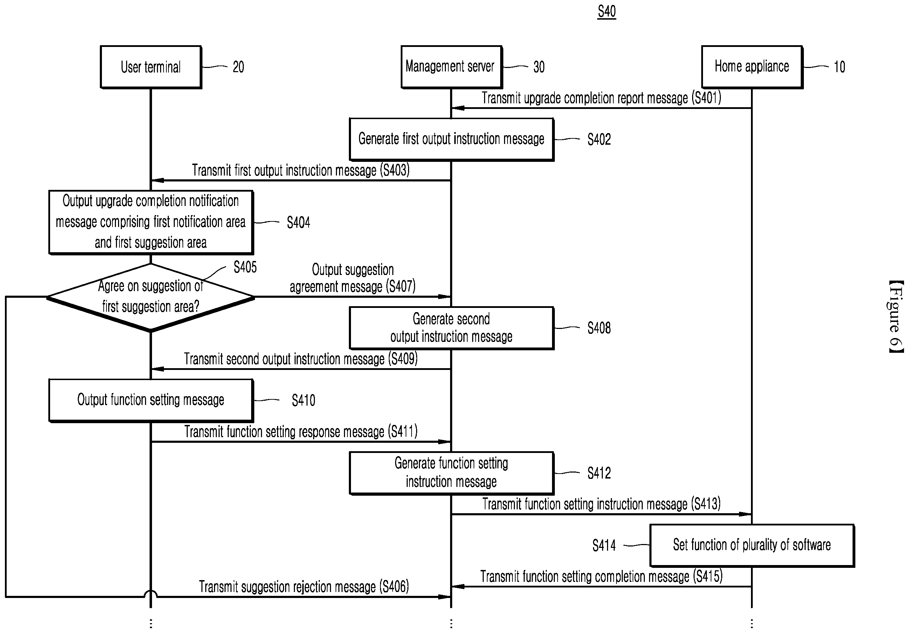

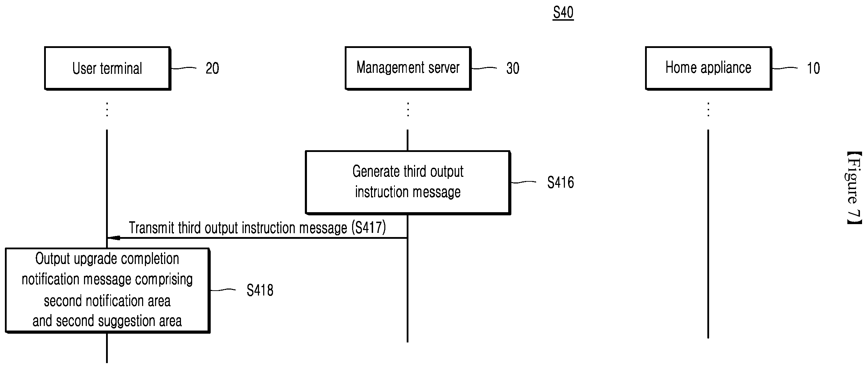

Hereinafter, a following process (S40) of the upgrade is described specifically with reference to FIGS. 6 and 7.

FIGS. 6 and 7 are views showing a flow of a following process (S40) of an upgrade in a method for upgrading a home appliance 10, in one embodiment.

In FIGS. 6 and 7, assume that the management server 30, the home appliance 10 and the user terminal 20 communicably connect with one another. Additionally, the upgrade process (S30) described above may be defined as comprising the step of writing the plurality of software data to the plurality of control units 122, 132, 142.

Further, assume that the plurality of software is upgraded. Each of the plurality of software may be firmware and/or a contents program. The firmware may be an operation program in charge of controlling and driving hardware. As described above, the plurality of control units 122, 132, 142 of the home appliance 10 may operate based on different types of firmware. The contents program may be a service program in relation to the operation of the home appliance 10 and executed on specific firmware. In an example, in the case of a washing machine, the contents program may be a program for setting the background screen of the display unit of the washing machine, a program for setting a washing completion notification sound, a program for setting an adjustment of an amount of inserted detergent/softener and the like.

Hereinafter, the following process (S40) of the upgrade is described specifically. For convenience of description, a "newly upgraded function of software" is referred to as "upgraded function".

In S401, the home appliance 10 may transmit an upgrade completion report message.

That is, the upgrade process, as described above, may comprise a download procedure (S20) of downloading the plurality of software data in bulk and consecutively and a writing process (S30) of writing the plurality of software data downloaded in bulk and consecutively. As the plurality of software data is written to corresponding control units, the upgrade of a plurality of software may be completed. In the case where the upgrade of the plurality of software is completed, the home appliance 10 may transmit an upgrade completion report message to the management server 30.

The upgrade completion report message may comprise information notifying that the upgrade of the plurality of software is completed without causing an error. Further, in the embodiment, the upgrade completion report message may comprise identifies ID of at least a portion of the plurality of software. The software identifier may be included in the upgrade completion report message, to set an upgraded function of the software.

Specifically, the plurality of software upgraded may comprise at least one of first software and at least one of second software. At least one of software may respectively be software requiring setting of an upgraded function. In an example, the first software may be a contents program requiring setting of an upgraded function. At least one of second software may respectively be software requiring no setting of an upgraded function. In an example, the second software may be firmware, and may be a contents program required no setting of an upgraded function.

Thus, at least a portion of the plurality of software described above may correspond to at least one of first software. In other words, the upgrade completion report message may comprise at least one of first software identifier but not comprise at least one of second software identifier.

In S402, the management server 30 may generate a first output instruction message, based on the upgrade completion report message.

The output instruction message may be a message for instructing an output of a specific message to the user terminal 20. The first output instruction message may be an output instruction message for instructing an output of an upgrade completion notification message to the user terminal 20. The first output instruction message may comprise information notifying that a plurality of software is upgrade without causing an error, an identifier of at least one of software and an output instruction of an upgrade completion notification message.

In S403, the management server 30 may transmit the first output instruction message to the user terminal 20.

In S404, the user terminal 20 may output an upgrade completion notification message, based on the first output instruction message.

The upgrade completion notification message may comprise a first notification area and a first suggestion area. The first notification area may be an output area notifying that a plurality of software is upgraded completely without causing an error. The first suggestion area may be an area suggesting setting an upgraded function of at least a portion of software.

In the embodiment, the terminal interface 230 provided at the user terminal 20 may correspond to a display unit. Each of the first notification area and the first suggestion area may be a display area displaying an image and/or a text.

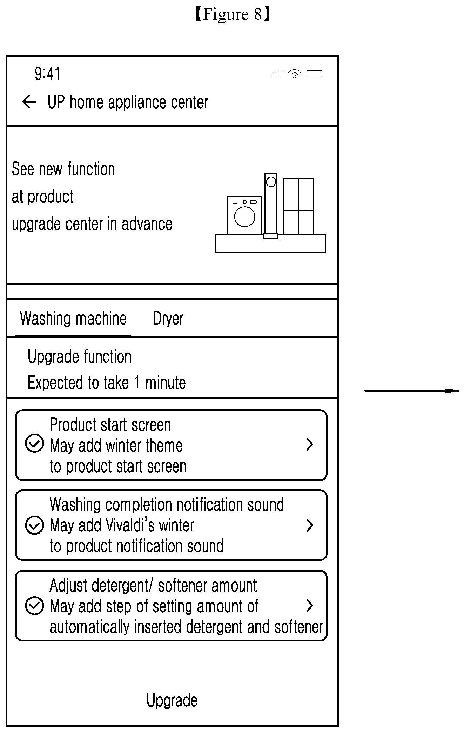

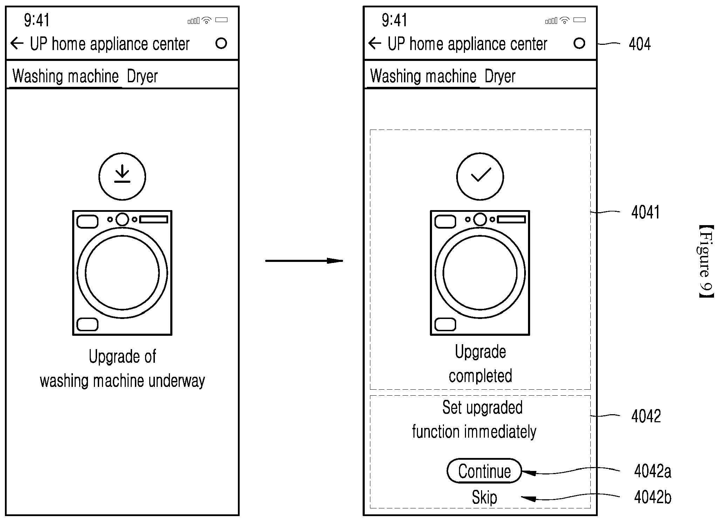

FIGS. 8 and 9 are views showing an example of the upgrade completion notification message.

At a time point when the download procedure (S20) described above ends, or a time point when the writing procedure (S30) described above starts, the user terminal 20 may display an upgrade start message illustrated in FIG. 8. The upgrade start message as illustrated in FIGS. 8 to 9 may be displayed on the user terminal 20, to write three contents programs (i.e., a product start screen, a washing completion notification sound, and an adjustment of an amount of inserted detergent and softener) to be installed in a washing machine.

In the case where the user inputs an event signal (a touch signal) to the user terminal 20 for writing all the three contents programs, the user terminal 20 may display a message for proceeding with writing, illustrated on the left of FIG. 9.

In the case where all the three contents programs are written, the three contents programs may be upgraded completely. At this time, the user terminal 20 may display an upgrade completion notification message 404 illustrated on the right of FIG. 9.

As described above, the upgrade completion notification message 404 may comprise a first notification area 4041 and a first suggestion area 4042.

Information notifying that the plurality of software is written (i.e., upgraded) completely may be displayed visually in the first notification area 4041. That is, text information such as "Writing is completed" may be displayed in the first notification area 4041.

Information suggesting setting an upgraded function of software may be displayed visually in the first suggesting area 4042. That is, text information such as "Set the written function immediately" may be displayed in the first suggestion area 4042.

Referring back to FIG. 6, in S405, the user terminal 20 may determine whether the user agrees on the suggestion of the first suggestion area.

The user terminal 20 may determine whether the user agrees on a suggestion of the first suggestion area, based on an event signal (a touch signal) input by the user.

In an example of FIG. 9, the user may input a first event signal for touching a "Continue" button 4042a, displayed in the first suggestion area 4042, to the user terminal 20. The user terminal 20 may determine that the user agrees on a suggestion of the first suggestion area, based on the first event signal. Additionally, the user may input a second event signal for touching a "skip" button 4042b, displayed in the first suggestion area 4042, to the user terminal 20. The user terminal 20 may determine that the user rejects a suggestion of the first suggestion area, based on the second event signal.

In the case where the user rejects a suggestion of the first suggestion area, the user terminal 20 may transmit a suggestion rejection message to the management server 30, in S406. That is, in the case where the user touches the "skip" button 4042b in an example of FIG. 9, the user terminal 20 may transmit a suggestion rejection message to the management server 30. At this time, S408 to S415 for setting an upgraded function may not be performed, and S416 may be performed.

In the case where the user agrees on a suggestion of the first suggestion area, the user terminal 20 may transmit a suggestion agreement message to the management server 30, in S407. That is, in the case where the user touches the "Continue" button 4042a in an example of FIG. 9, the user terminal 20 may transmit a suggestion agreement message to the management server 30. At this time, S408 to S415 for setting an upgraded function may be performed and then S416 may be performed.

Then in S408, the management server 30 may generate a second output instruction message, based on the suggestion agreement message.

The second output instruction message may be an output instruction message for instructing the user terminal 20 to output a function setting message. The second output instruction message may comprise an output instruction of the function setting message.

In S409, the management server 30 may transmit the second output instruction message to the user terminal 20.

In S410, the user terminal 20 may output a function setting message, based on the second output instruction message.

The function setting message may be a message for setting an upgraded function of at least a portion of software. The function setting message may be output consecutively in relation to each of at least a portion of software.

In S411, the user terminal 20 may transmit a function setting response message that is a response to the function setting message, to the management server 30.

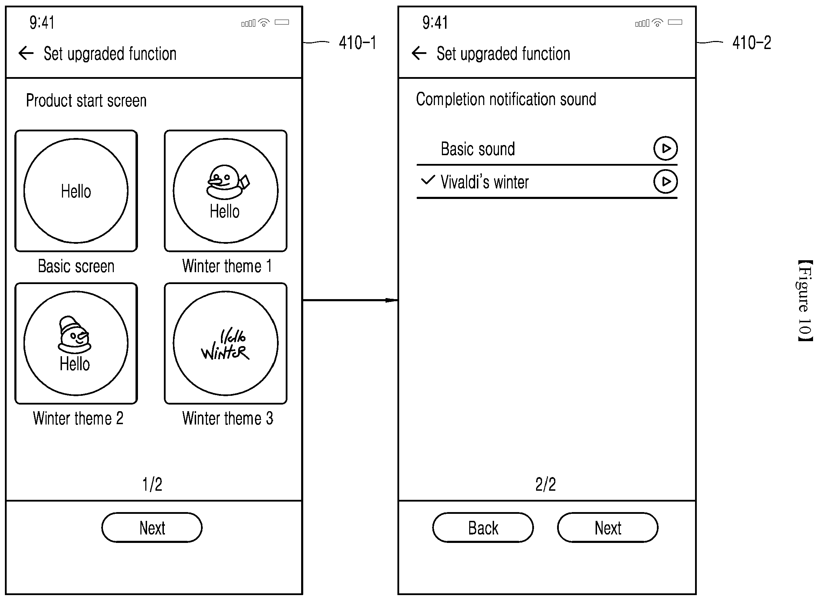

FIG. 10 is a view showing an example of a function setting message.

The function setting message is described with reference to FIGS. 8 to 10.

In the case where the user touches the "Continue" button 4042a displayed in the first suggestion area 4042, a first function setting message 410-1 may be displayed on the user terminal 20. The first function setting message 410-1 may be a function setting message for setting an upgraded function of a contents program on a "product start screen".

Three winter themes are added based on an upgrade of a contents program on the "product start screen". In an example, the user may select winter theme 1 among the three winter themes, and touch a "Next" button. Based on a touch of the "Next" button, a function setting response message in relation to the contents program on the "product start screen" may be transmitted to the management server 30.

Then a second function setting message 410-2 may be displayed on the user terminal 20. The second function setting message 410-2 may be a function setting message for setting an upgraded function of a contents program of a "washing completion notification sound".

One completion notification sound is added based on the upgrade of the contents program of the "washing completion notification sound". In an example, the user may select the completion notification sound (Vivaldi's winter) added, and touch the "Next" button. Based on a touch of the "Next" button, a function setting response message in relation to the contents program of the "washing completion notification sound" may be transmitted to the management server 30.

Further, though not illustrated in FIG. 10, a third function setting message may be displayed on the user terminal 20. The third function setting message may be a function setting message for setting an upgraded function of a contents program of an "adjustment of an amount of inserted detergent/ softener". In an example, the user may select an "adjustment of an amount of inserted detergent/ softener" added, and touch a "Completion" button. Based on a touch of the "Completion" button, a function setting response message in relation to the contents program of the "adjustment of an amount of inserted detergent/ softener" may be transmitted to the management server 30.

Referring back to FIG. 6, in S412, the management server 30 may generate a function setting instruction message based on the function setting response message. Additionally, in S413, the management server 30 may transmit the function setting instruction message to the home appliance 10. The function setting instruction message may be a message for instructing setting of a function set by the user to a corresponding control unit of the home appliance 10.

In S414, the home appliance 10 may set or apply an upgraded function of at least a portion of software, based on the function setting instruction message.

In the case where an upgraded function of at least a portion of software is set completely in S415, the home appliance 10 may transmit a function setting completion message to the management server 30.

In S416, the management server 30 may generate a third output instruction message, based on the function setting completion message.

The third output instruction message may be an output instruction massage for instructing the user terminal 20 to output an upgrade confirm notification message. The third output instruction message may comprise an output instruction of the upgrade confirmation notification message.

In S417, the management server 30 may transmit the third output instruction message to the user terminal 20.

In S418, the user terminal 20 may output an upgrade confirmation notification message, based on the third output instruction message.

The upgrade confirmation notification message may comprise a second notification area and a second suggestion area. The second notification area may be an output area notifying version information of a plurality of software. The second suggestion area may be an output area individually suggesting setting of an upgraded function of each of at least a portion of software. Additionally, the second suggestion area may further comprise summary information of an upgraded function of each of at least a portion of software.

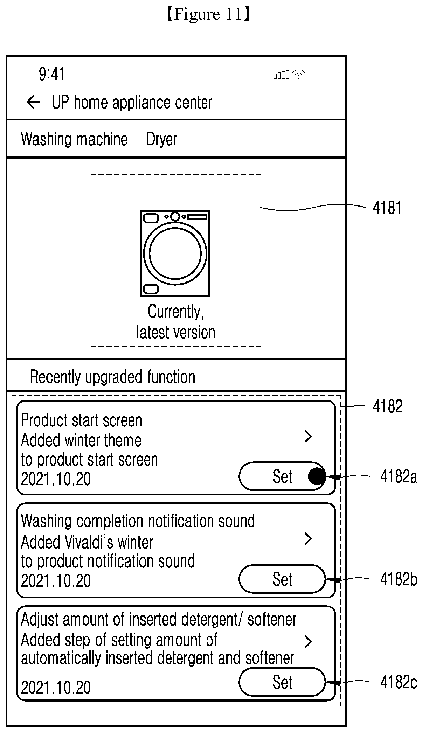

FIG. 11 is a view showing an example of an upgrade confirmation notification message.

The upgrade confirmation notification message is described with reference to FIGS. 8 to 11.

The upgrade confirmation notification message 418 may comprise a second notification area 4181 and a second suggestion area 4182.

Version information of a plurality of software may be displayed visually in the second notification area 4181. That is, a text message such as "Currently, latest version" may be displayed in the second notification area 4181.

Summary information on an upgraded function of software may be displayed visually in the second suggestion area 4182. The summary information may correspond to "Added winter theme to product start screen", "Added Vivaldi's winter to product notification sound" and "Added step of setting an amount of automatically inserted detergent and softener".

Further, information suggesting individually setting an upgraded function of software may be displayed visually in the second suggestion area 4182. The user may set or reset a function of software by touching "Set" buttons 4182a, 4182b, 4182c displayed in the second suggestion area 4182.

Thus, the following procedure (S40) of an upgrade may end.

Hereinafter, the configuration in which an upgraded function of software is set is summarized with reference to the details provided above.

In the method of one embodiment, an upgrade completion notification message comprising an area suggesting setting an upgraded function of software may be provided to the user. That is, the user may set an upgraded function of software while checking a completion of an upgrade of the software. Thus, immediately after the software is upgraded, a newly upgraded function of the software may be set.

Specifically, assume that an upgrade of adding a background image of the display unit of a washing machine is completed. At this time, in the related art, the user consecutively performs input events such as "setting tab → washing machine tab → background image setting tab → image selection" to set the background image of the display unit to a new background image. However, it takes time to perform the input events described above consecutively, and the user needs to concentrate to perform the input events.

According to the present disclosure, the upgrade completion notification message output to the user terminal 20 comprises a suggestion area for setting an upgraded function immediately. Accordingly, the user may simply set a newly upgraded function of software through the suggestion area.

Further, in the method of one embodiment, an upgrade completion notification message comprising a suggestion area where software requiring no setting of a new function is excluded may be provided to the user. That is, a function setting suggestion area of software such as firmware and the like requiring no setting of a function is excluded from the upgrade completion notification message. Thus, the user does not need to check unnecessary information, and user convenience in relation to setting of a newly upgraded function of software may improve.

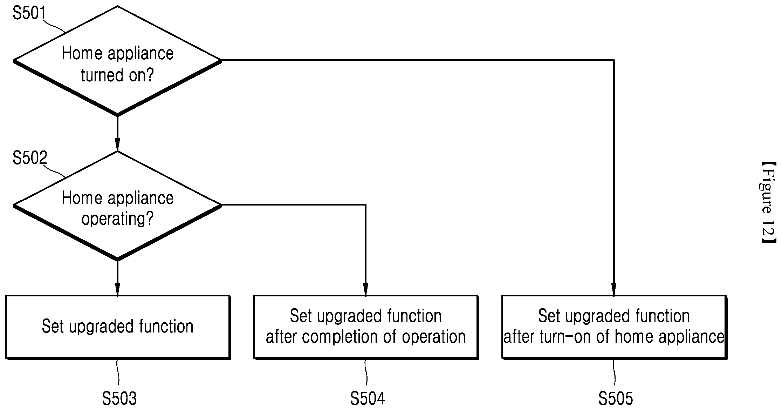

A partial step performed in FIG. 12 may be performed after S404 described with reference to FIGS. 6 and 7, or performed after S418. At this time, in the case where the steps of FIG. 12 are performed after S418, the steps of FIG. 12 may not be performed after S404.

Further, assume that the management server 30 and/or the user terminal 20 have already known state information of the home appliance 10. Herein, the state information of the home appliance 10 may comprise a state in relation to power (i.e., a turn-on/off state) of the home appliance 10 and an operation state (i.e., a state in which a washing operation of a washing machine is performed or not performed) of a unique function of the home appliance 10.

Further, the home appliance 10, the user terminal 20 and the management server 30 may perform the steps of FIG. 12 in association with one another.

In S501, it may be determined whether the home appliance 10 is turned on.

Herein, the "turn-off of the home appliance 10" may correspond to a situation where power is supplied from the outside, while the home appliance 10 does not perform any operation. Further, even in the case where the home appliance 10 is turned off, the communication 120 of the home appliance 10 may be operating based on a power saving mode.

In the case where it is determined that the home appliance 10 is turned on, S503 may be performed. In the case where it is determined that the home appliance 10 is turned off, S505 may be performed.

In S502, it may be determined whether the home appliance 10 is operating.

In the case where it is determined that the home appliance 10 is not operating, in S503, an upgraded function may be set. The setting of an upgraded function is described with reference to FIGS. 6 and 7.

In the case where it is determined that the home appliance 10 is operating, in S504, an upgraded function may be set after the operation is completed.

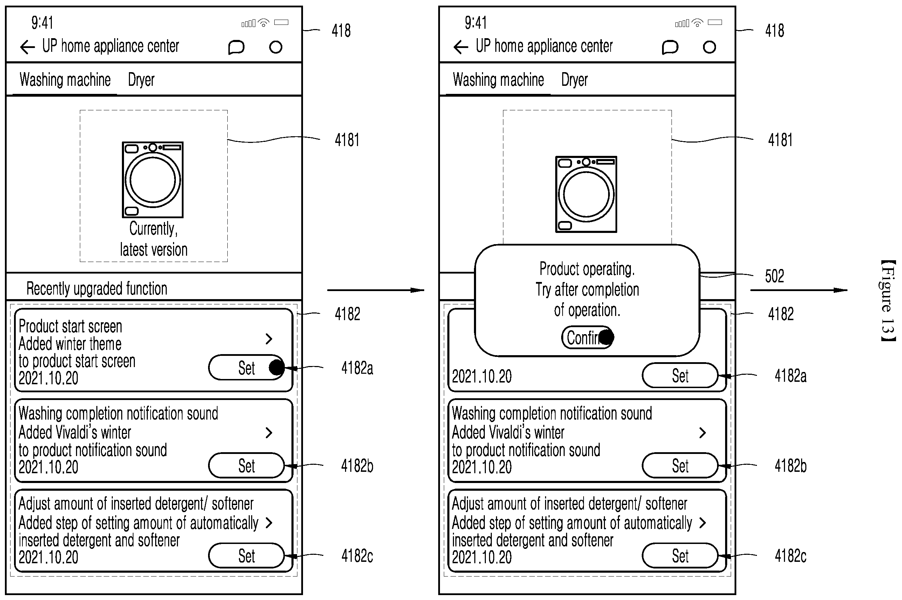

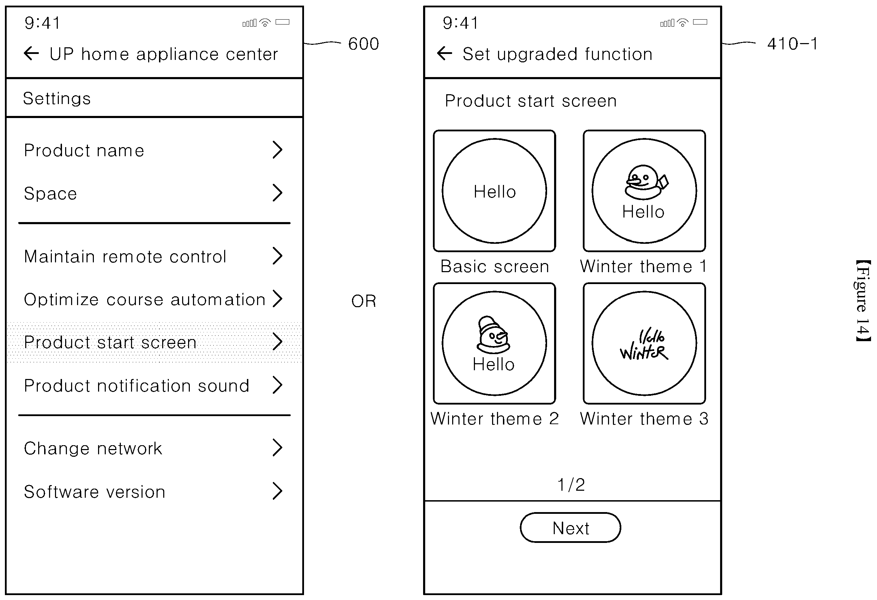

FIGS. 13 and 14 are views showing the concept of S504.

Referring to FIGS. 13 and 14, after the upgrade confirmation notification message 418 is output, the user terminal 20 may check that the home appliance 10 is turned on and is performing its unique operation, through the management server 30 and the like. At this time, the user terminal 20 may output a home appliance operation notification message 502 for standing by the setting of an upgraded function as well as notifying a state where the home appliance 10 is operating. In an example, the home appliance operation notification message 502 may be text-type information such as "Product operating. Try after completion of operation."

At this time, the user terminal 20 may output a function setting message in the case where a unique operation of the home appliance 10 is performed completely. The function setting message may be a setting screen 600 of an application or the function setting message described with reference to FIG. 10. Accordingly, the user may set an upgraded function simply after the operation of the home appliance 10 is completed.

Furthermore, in the case where it is determined that the home appliance 10 is turned off, in S505, an upgraded function may be set after the home appliance 10 is turned on.

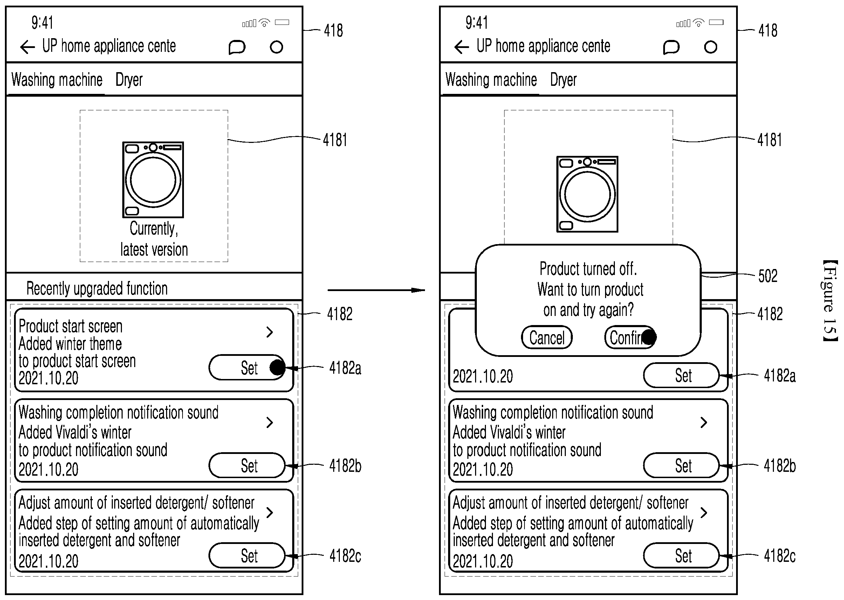

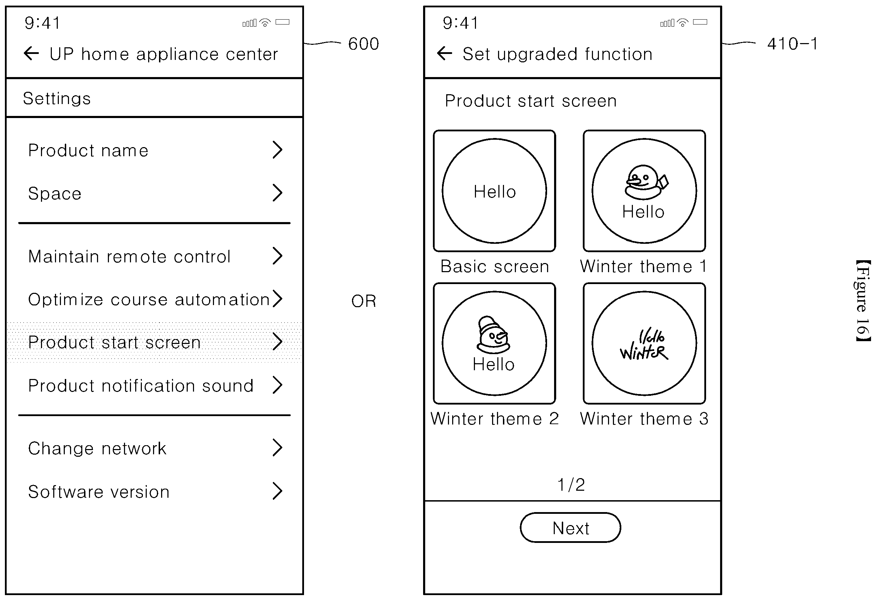

FIGS. 15 and 16 are views showing the concept of S505.

Referring to FIGS. 15 and 16, after the upgrade confirmation notification message 418 is output, the user terminal 20 may check that the home appliance 10 is turned off, through the management server 30 and the like. At this time, the user terminal 20 may output a home appliance turn-off message 505 for standing by setting of an upgraded function as well as notifying that the home appliance 10 is turned off. In an example, the home appliance turn-off notification message 505 may be text-type information such as "Product turned off. Want to turn on power and try again?".

At this time, the user terminal 20 may output a function setting message after checking the home appliance 10 is turned on. At this time, the function setting message may be a setting screen 600 of an application, or a function setting message described with reference to FIG. 10. Thus, the user may set an upgraded function simply even in the case where the home appliance 10 is turned off.

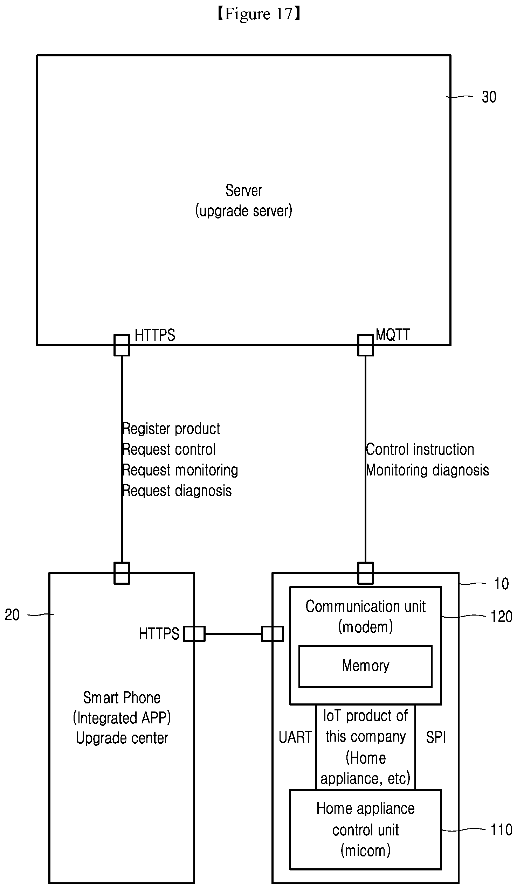

FIG. 17 is a view showing specific communication among a management server 30, a home appliance 10 and a user terminal 20 in one embodiment. FIG. 17 shows some of the components of FIG. 2, but is not limited.

The management server 30 is a writing server storing upgrade software and transmitting the upgrade software to the home appliance 10.

The user terminal 20 may set a network with the home appliance 10.

The home appliance 10 comprises an electronic device providing IoT functions. The home appliance 10 comprises a communication unit 120, e.g., a modem, and a main control unit 110 (a home appliance control unit), e.g., a micom. Additionally, the communication unit 120 comprises a storage unit 123, e.g., a memory.

The communication unit 120 and the main control unit 110 may perform communication by using universal asynchronous receiver/transmitter (UART) and serial peripheral interface (SPI) communication protocols. Certainly, the communication unit 120 and the main control unit 110 may transceive information based on a communication protocol such as a variety of serial/parallel communication methods, a variety of synchronous/asynchronous communication methods and the like, in addition to the UART or SPI communication protocols. The main control unit 10 comprises a function control unit in charge of one or more functions of the home appliance 10, an interface control unit capable of monitoring functions of a product such as an LCD, an LED, a speaker or a buzzer and the like and capable of monitoring writing and installation, and the like.

The management server 30 may communicate with the user terminal 20 by using a hypertext transfer protocol secure (HTTPS) communication protocol. In one embodiment, the management server 30 and the user terminal 20 may perform a product registration, a control request, a monitoring request, a diagnosis request and the like, by using a communication protocol (HTTPS).

Furthermore, the management server 30 may perform communication with the home appliance 10 based on a message queuing telemetry transport (MQTT) communication protocol. In one embodiment, the management server 30 and the home appliance 10 may perform an instruction for control, monitoring, diagnosis and the like by using a communication protocol (MQTT).

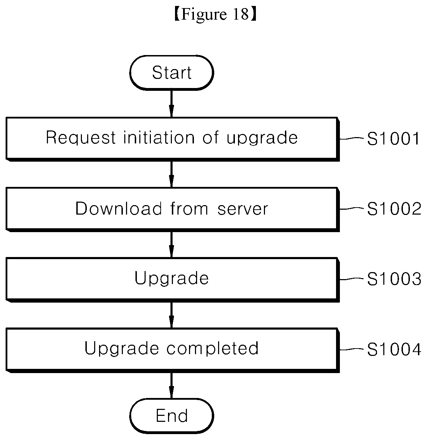

FIG. 18 shows an upgrade process according to another embodiment.

In the case where upgrade contents to be applied to the home appliance is newly registered with the management server, the upgrade may be performed after a selection and a download based on the flow of FIG. 18. FIG. 18 shows an embodiment in which the user selects and requests an upgrade before a download to the home appliance to start the download.

As software such as programs and data and the like required for the upgrade are registered with the management server 30, the upgradeable software may be checked and a list of upgradable software may be displayed through the user interface 140 of the home appliance 10 or the terminal interface 230 of the user terminal 20.

In the case where the user selects one or more of upgradeable software through the user interface 140 of the home appliance 10 or the terminal interface 230 of the user terminal 20, the home appliance 10 or the user terminal 20 may requests the management server 30 to start the upgrade (S1001).

Then the home appliance 10 may download the selected software from the management server 30 (S1002). When the download is completed, the home appliance 10 may install/write the downloaded software in the home appliance control unit to proceed with the upgrade (S1003).

In the case where the upgrade is completed (S1004), the home appliance 10 may perform re-booting. The user interface 140 of the home appliance 10 or the terminal interface 230 of the user terminal 20 may notify or display an upgraded function.

Even though all the components of the embodiments in the present disclosure are described as being combined into one component or operating in combination, embodiments are not limited to the embodiments set forth herein, and all the components may be selectively combined to operate within the scope of the purpose of the disclosure. All the components may be respectively implemented as an independent hardware, or some or all of the components may be selectively combined and may be embodied as a computer program including a program module that performs some or all functions combined into one or more hardware. Codes or code segments of the computer program may be easily inferred by those skilled in the art. The computer program may be stored in a computer-readable recording medium and may be read and executed by a computer, whereby the embodiments in the disclosure can be realized. Examples of a storage medium of the computer program include storage mediums including a magnetic recording medium, an optical recording medium and a semiconductor recording element. The computer program for realizing the embodiments in the disclosure includes a program module which is transmitted via an external device in real time.

The subject matter of the present disclosure is described with reference to particulars comprising the components and the like, the limited embodiments and the limited drawings, but they are provided for a comprehensive understanding of the subject matter of the disclosure. Embodiments are not limited to the embodiments set forth herein, and one having ordinary skill in the art to which the disclosure pertains can understand that various modifications and changes are drawn from the particulars, embodiments and drawings. Thus, the technical scope of the present disclosure is not to be limitedly defined by the embodiment described herein, and the claims, and the equivalents and modifications thereof are to be included in the technical scope of the present disclosure.

## Claims

1. A management server, comprising:
a communication unit configured to communicate with a user terminal and a home appliance; and
a control unit configured to control the communication unit and to perform an operation in relation to an upgrade of a plurality of software to be installed in the home appliance,
wherein in a case where the plurality of software is upgraded completely, the communication unit transmits a first output instruction message for instructing an output of an upgrade completion notification message to the user terminal, and
the upgrade completion notification message comprises a first notification area notifying that the plurality of software is upgraded completely, and further comprises a first suggestion area suggesting setting an upgraded function of at least a portion of the plurality of software.

2. The management server of claim 1, wherein the communication unit receives an upgrade completion report message of the plurality of software, comprising identifiers of at least a portion of the software, from the home appliance, and
the first suggestion area is generated based on the identifiers of at least a portion of the software.

3. The management server of claim2, wherein the plurality of software comprises at least one of first software requiring setting of an upgraded function, and at least one of second software requiring no setting of an upgraded function,
at least a portion of the software corresponds to at least one of the first software,
the upgrade completion report message comprises an identifier of at least one of the first software, and does not comprise an identifier of at least one of the second software.

4. The management server of claim 1, wherein the communication unit receives a suggestion agreement message for agreeing on a suggestion of the first suggestion area from the user terminal, and
in response to the suggestion agreement message, the communication unit transmits a second output instruction message for instructing an output of a function setting message for setting an upgraded function of at least a portion of the software to the user terminal or the home appliance.

5. The management server of claim 4, wherein the function setting message is output consecutively in relation to each of at least a portion of the software.

6. The management server of claim 5, wherein the communication unit transmits a third output instruction message for instructing an output of an upgrade confirmation notification message to the user terminal, in a case where an upgraded function of at least a portion of the software is set completely, and
the upgrade confirmation notification message comprises a second notification area notifying version information of the plurality of software, and further comprises a second suggestion area individually suggesting setting an upgraded function of each of at least a portion of the software.

7. The management server of claim 6, wherein the second suggestion area further comprises summary information on an upgraded function of each of at least a portion of the software.

8. The management server of claim 1, wherein the communication unit receives a suggestion rejection message for rejecting a suggestion of the first suggestion area from the user terminal or the home appliance,
in response to the suggestion rejection message, the communication unit transmits a third output instruction message for instructing an output of an upgrade confirmation notification message to the user terminal, and
the upgrade confirmation notification message comprises a second notification area notifying version information of the plurality of software , and further comprises a second suggestion area individually suggesting setting of an upgraded function of each of at least a portion of the software.

9. The management server of claim 8, wherein the second suggestion area further comprises summary information on an upgraded function of each of at least a portion of the software.

10. The management server of claim 1, wherein the software is any one of firmware or a contents program, and
each of at least a portion of the software is the contents program.

11. A home appliance, comprising;
a communication unit configured to communicate with a management server;
a user interface configured to output specific information to a user; and
a control unit in which a plurality of software is installed,
wherein in a case where the communication unit downloads a plurality of software data from the management server, writes the plurality of downloaded software data to the control unit and upgrades the plurality of software, and then the upgrade is completed, the communication unit transmits an upgrade completion report message of the plurality of software to the management server,
the upgrade completion report message comprises identifiers of at least a portion of the plurality of software,
at least a portion of the software is software requiring setting of an upgraded function.

12. The home appliance of claim 11, wherein the software is any one of firmware or a contents program, and
each of at least a portion of the software is the contents program.

13. The home appliance of claim 11, wherein the communication unit receives a function setting instruction message in relation to each of at least a portion of the software from the management server, and
the communication unit transmits the function setting instruction message to the control unit.

14. A method for controlling a user terminal to upgrade a home appliance, comprising:
receiving a first output instruction message corresponding to completion of an upgrade of a plurality of software from a management server;
outputting an upgrade completion notification message of the plurality of software based on the first output instruction message,
wherein the upgrade completion notification message comprises a first notification area notifying that the plurality of software is upgraded completely, and further comprises a first suggestion area suggesting setting an upgraded function of at least a portion of the plurality of software.

15. The method of claim 14, wherein the plurality of software comprises at least one of first software requiring setting of an updated function, and at least one of second software requiring no setting of an updated function,
at least a portion of the software corresponds to at least one of the first software .

16. The method of claim 14, further comprising:
receiving a first event signal agreeing on a suggestion of the first suggestion area, input from a user;
generating a suggestion agreement message based on the first event signal and transmitting the suggestion agreement message to the management server;
receiving a second output instruction message transmitted from the management server based on the suggestion agreement message; and
outputting a function setting message for setting an upgraded function of at least a portion of the software based on the second output instruction message.

17. The method of claim 16, further comprising:
receiving a third output instruction message from the management server, in a case where an upgraded function of at least a portion of the software is set completely; and
outputting an upgrade confirmation notification message based on the third output instruction message,
wherein the upgrade confirmation notification message comprises a second notification area notifying version information of the plurality of software, and further comprises a second suggestion area individually suggesting setting an upgraded function of each of at least a portion of the software.

18. The method of claim 14, further comprising:
receiving a second event signal rejecting a suggestion of the first suggestion area, input from a user
generating a suggestion rejection message based on the second event signal and transmitting the suggestion rejection message to the management server;
receiving a third output instruction message transmitted from the management server based on the suggestion rejection message; and
outputting an upgrade confirmation notification message based on the third output instruction message,
wherein the upgrade confirmation notification message comprises a second notification area notifying version information of the plurality of software, and further comprises a second suggestion area individually suggesting setting an upgraded function of each of at least a portion of the software.

19. The method of claim 14, further comprising:
outputting a function setting stand-by message, in a case where a stand-by event in which an upgraded function of at least a portion of the software fails to be set is occurred because of an operation state of the home appliance; and
outputting a function setting message for setting an upgraded function of at least a portion of the software, in a case where the stand-by event ends.

20. The method of claim 19, wherein the operation state of the home appliance comprises a turn-on/turn-off state of the home appliance and a state in which a unique operation of the home appliance is performed, and
an end of the stand-by event comprises a turn-on of the home appliance and an end of performance of a unique operation of the home appliance.

21. A method for upgrading a home appliance, comprising:
notifying an upgradable function to a home appliance;
selecting the function and instructing the home appliance to be upgraded;
upgrading the home appliance with software providing the function, based on the instruction, and notifying completion of the upgrade operation;
providing a function setting screen required to operate the upgraded function, at the home appliance.

22. The method of claim 21, wherein the setting screen is selectively provided based on an operation state of the home appliance.

23. The method of claim 21, wherein in a state where the home appliance is turned off, the turn-off state is guided, and a function setting is proceeded after the home appliance is turned on.

24. The method of claim 21, wherein in a state where the home appliance is operating, the operation state is guided, and a function setting is proceeded after the operation of the home appliance ends.
